# EUROPÄISCHE PATENTSCHRIFT

(11) **EP 2 070 843 B1**
(45) Veröffentlichungstag und Bekanntmachung des Hinweises auf die Patenterteilung: **03.10.2012**
(21) Anmeldenummer: 08167385.7
(22) Anmeldetag: 23.10.2008
(51) Int. Cl.: B65G 35/06

(54) **Verfahren und Vorrichtung zum Transportieren von Objekten**
Method and device for transporting objects
Procédé et dispositif destinés au transport d'objets

(30) Priorität: 11.12.2007 DE 102007059611
(43) Veröffentlichungstag der Anmeldung: 17.06.2009
(73) Patentinhaber: Gerhard Schubert GmbH, 74564 Crailsheim (DE)
(72) Erfinder: Schubert, Gerhard, 74564 Crailsheim (DE)
(74) Vertreter: Alber, Norbert

(56) Entgegenhaltungen:
- EP-A- 1 336 553
- DE-A1- 3 917 630
- DE-A1- 4 010 024
- DE-A1- 10 322 556
- DE-A1- 19 745 313
- DE-A1-102006 045 191
- DE-A1-102007 017 646
- DE-C1- 19 709 034
- DE-C2- 19 532 956
- GB-A- 2 110 621
- JP-A- 11 334 586
- JP-A- 58 162 424
- US-A- 5 388 684

## Beschreibung

### I. Anwendungsgebiet

Die Erfindung betrifft ein Verfahren sowie eine Vorrichtung zum Transportieren von Objekten. Dabei ist vor allem das Transportieren in definierter Position und Lage der einzelnen Objekte angestrebt.

### II. Technischer Hintergrund

Dies tritt häufig im Bereich von Verpackungsanlagen auf, da zum Beispiel für das Abpacken von Waren in Verpackungen einerseits die Verpackungen (Schachteln) und andererseits die Waren zunächst zum Ort der Zusammenführung transportiert werden müssen und danach die gefüllten Verpackungen, insbesondere Schachteln, ebenfalls weiter transportiert werden müssen.

Darüber hinaus ist in vielen Fällen bei der Produktion, beispielsweise von einem Bearbeitungsschritt zum nächsten, ebenfalls ein Transport von Objekten notwendig.

Hierfür wurden in der Vergangenheit unterschiedliche Transportvorrichtungen benutzt, beispielsweise Förderbänder in unterschiedlichsten Varianten, etwa mit fest vorgegebenen Positionen für die einzelnen Objekte oder mit frei wählbarer Position auf dem Förderband, aber auch definiert transportierende Vorrichtungen wie Greifer, einzelne Transportfahrzeuge, Roll- und Gleitbahnen und selbstständig arbeitende Transportfahrzeuge.

Bei einem Transport über größere Strecken fiel dabei die Wahl auf Förderbänder und verwandte Transportvorrichtungen, da diese bei relativ begrenztem Raumbedarf eine kostengünstige Lösung zum Transport großer Stückzahlen von Objekten boten.

Gerade im Verpackungsbereich müssen jedoch oft zusätzliche Randbedingungen erfüllt werden, beispielsweise eine sehr genaue Positionierbarkeit der Objekte auf der Transportvorrichtung oder mittels der Transportvorrichtung am Abgabepunkt, oder das Zusammenstellen von einzelnen Objekten zu Gruppen einer bestimmten Anzahl und Positionierung zueinander bzw. ein Umgruppieren von einer Gruppengröße zu einer anderen Gruppengröße.

Dies wird häufig bedingt durch die einzelne Anlieferung der Objekte aus einer Produktionsanlage und eine gruppenweise Abpackung.

Zusätzlich sollen derartige Transportvorrichtungen einfach und kostengünstig herzustellen sein, also insbesondere aus wenigen verschiedenen Einzelteilen bestehen, und einen geringen Wartungsbedarf besitzen, also einem geringen Verschleiß unterliegen bzw. leicht zu reparieren und auszutauschen sein.

Dabei soll wie bisher der Platzbedarf, beispielsweise die Länge der Transportvorrichtung, möglichst nicht über die zu erzielende Transportlänge hinausgehen.

Die bisherigen Lösungen, vor allem die verschiedenen Varianten von Transportbändern, bestehen aus einer großen Anzahl von Einzelteilen, vor allem dann, wenn Zusatzeinrichtungen zum exakten Führen bzw. Positionieren der Objekte auf dem Transportband benötigt werden. Auch diejenigen Varianten, die ein Gruppieren bzw. Umgruppieren von Objekten ermöglichen, lassen sich nur mit großen Aufwand so gestalten, dass sie gleichzeitig eine große Transportlänge überwinden können, so dass bisher in der Regel der Vorgang des Transportierens einerseits und der Vorgang des Gruppierens bzw. Umgruppierens andererseits doch unterschiedliche, separate Vorrichtungen bewirkt wurde, die unterschiedlich aufgebaut waren.

Des Weiteren ist ein zentrales Problem aller Transportvorrichtungen der Rücktransport der leeren Transportelemente zum Ausgangspunkt, um erneut mit Produkten beladen zu werden.

Bei endlos umlaufenden Förderbändern oder bandgetriebenen Transportelementen erfolgt dies mit Hilfe von Umlenkrollen am Anfang und Ende der Transportstrecke über das Untertrum des Transportbandes, welches lediglich dem Rücktransport dient.

Bei bahngebundenen Transportsystemen müssen die Transportelemente in der Regel auf einer separaten, nur für diesen Rücktransport zur Verfügung stehenden, Führungsbahn zurücktransportiert werden und hierfür von der ersten Führungsbahn für den Hintransport zur zweiten Führungsbahn für den Rücktransport transferiert werden, was durch eine Umkehrschleife, einen Wender, Umsetzer oder Ähnliches erfolgen muss.

Dies erfordert nicht nur technischen Aufwand, sondern erhöht auch den Platzbedarf, in der Regel in der Aufsicht betrachtet zumindest in der Breite.

Aus der DE 195 32 956 C2 ist eine gatturgsgemäβe Transportvorrichtung für Trägerwagen bekannt, wobei die Trägerwagen auf einer oberen Führungsbahn zum Werkstücktransport fahren und zum Rückfahrtweg in eine untere Führungsbahn überführt werden kann. In der bekannten Transportvorrichtung werden alle Transportwägen von synchron angetriebenen Antriebswellen bewegt. Demnach ist die Bewegungsrichtung und -geschwindigkeit aller Transportwägen einer Führungsbahn gleich und entsprechend umgekehrt die Bewegungsrichtung der Transportwägen der anderen Führungsbahn. Gezielte Bewegungen einzelner Trägerwagen sind demnach mit der bekannten Vorrichtung nicht möglich.

### III. Darstellung der Erfindung

### a) Technische Aufgabe

Es ist daher die Aufgabe gemäß der Erfindung, ein Transportverfahren und eine dementsprechende Vorrichtung zur Verfügung zu stellen, die nur einen geringen

Platzbedarf, insbesondere in der Breite, erfordert und individuell aus im Wesentlichen immer gleichen Elementen modular aufgebaut werden kann.

### b) Lösung der Aufgabe

Diese Aufgabe wird durch die Merkmale der Ansprüche 1 und 8 gelöst. Vorteilhafte Ausführungsformen ergeben sich aus den Unteransprüchen.

Durch das Verschwenken des wenigstens einen Transportschlittens zusammen mit den ihn tragenden Führungsbahnen am Anfang und Ende der Transportstrecke zwecks Ausrichtung auf eine andere Führungsbahn ergeben sich verschiedene Vorteile gegenüber anderen Transportvorrichtungen, vor allem wenn das Verschwenken der Führungsbahn um eine in Längsrichtung der Führungsbahn verlaufende Achse erfolgt:

Die für Hin- und Zurückbewegung benötigten mindestens zwei Führungsbahnen sind an ein und demselben Bahnkörper angeordnet sein, wodurch ein optimal niedriger Raumbedarf vorliegt.

Die Verschwenkbarkeit des schwenkbaren Bahnkörpers erfordert ebenfalls einen minimalen Platzbedarf und führt dazu, dass auf der einen Führungsbahn die Transportschlitten nur in Vorwärtsrichtung und auf der anderen Transportbahn nur in Rückwärtsrichtung durchgängig bewegt werden können und somit Abläufe auf der Vorwärts-Führungsbahn unbeeinflusst von den Vorgängen auf der Rückwärts-Führungsbahn ablaufen können.

Da das Funktionselement im wesentlichen das drehbare Anfangsmodul und Endmodul der Führungsbahnen bzw. des Bahnkörpers ist, können dazwischen beliebig viele mittlere Module angeordnet werden, wodurch große Transportlängen mit sehr wenigen Einzelteilen möglich werden.

Indem vor allem die mittleren Module nicht unbedingt eine lineare Führungsbahn sondern auch gekrümmte Führungsbahnen aufweisen können - sofern die Transportschlitten hierfür geeignet sind, beispielsweise in dem sie nur mittels zweier beabstandeter Zapfen in die Führungsbahn eingreifen - können auch komplizierte Führungsbahnen realisiert werden.

Vor allem der mittlere Abschnitt der Transportstrecke kann dabei aus mehreren gleichen, mittleren Bahnkörpermodulen bestehen, insbesondere Modulen gleicher Länge. Darüber hinaus können auch die Bahnkörper der schwenkbaren Anfangs-und Endmodule die gleichen sein wie die mittleren Bahnkörper-Module mit dem Unterschied, dass sie zusätzlich schwenkbar bzw. drehbar befestigt werden müssen.

Die Führungsbahnen sind vorzugsweise die auf den Außenflächen der Bahnkörper angeordnet, wobei vorzugsweise auf der Oberseite des Bahnkörpers angeordnete Führungsbahn für die Vorwärtsrichtung benutzt wird, so dass auf dieser Führungsbahn aufsitzende Transportschlitten auf ihrer Oberseite mit Produkten beladen werden können, die lediglich aufgesetzt werden und anschließend mit Hilfe von geeigneten Mitnehmern wie etwa Saugern dort festgehalten werden müssen. Beim Beschleunigen und Abbremsen des Transportschlittens muss unbedingt das Verrutschen der Produkte auf dem Transportschlitten verhindert werden, da die definiert aufgesetzt werden und ihre definierte Position zum Transportschlitten unbedingt behalten müssen, da im weiteren Verlauf primär lediglich die Position und Bewegung dieses Transportschlittens bestimmt wird.

Die auf der Unterseite des Bahnkörpers befindliche Führungsbahn wird dann für die Rückwärtsbewegung der dann leeren Transportschlitten verwendet, so dass es kein Nachteil ist, wenn deren Auflagefläche nach unten weist.

Unabhängig davon können an den Bahnkörpern mehr als ein Paar von Führungsbahnen angeordnet werden, vor allem dann, wenn die für jedes Paar von Führungsbahnen verwendeten Transportschlitten unterschiedlich gestaltet sind.

So können direkt auf der Oberseite und Unterseite des Bahnkörpers laufende erste Transportschlitten für eine erste Transportaufgabe benutzt werden und anders gestaltete, z. B. seitlich auskragende, Transportschlitten auf den Längsseiten der Bahnkörper ebenfalls Produkte transportieren.

Einer der wichtigsten Vorteile der erfindungsgemäßen Transportvorrichtung besteht jedoch darin, dass die Vorrichtung, vor allem die Bahnkörper, in der Aufsicht betrachtet sehr schmal bauend hergestellt werden können, während die darauf laufenden Transportschlitten durchaus breiter sein können und die darauf aufgesetzten Produkte wiederum nochmals breiter sein können.

Dennoch müssen die damit transportierten Produkte gegenüber anderen Elementen als dem sie tragenden Transportschlitten, wie etwa benachbarten stillstehenden Transportschlitten oder ähnlichem, keine gleitende Relativbewegung vollziehen, mit den bei einem solchen Kontakt auftretenden Schwierigkeiten wie Abrieb, Positionsveränderung usw.

Die einzelnen Bahnkörpermodule werden stirnseitig gekoppelt mit Hilfe von an jeder Stirnseite vorhandenen, mindestens einem Positionierelement, im einfachsten Fall an jeder Stirnseite zwei runden Positionierzapfen, die in entsprechende Vertiefungen an der Stirnseite des angrenzenden Bahnkörpers passen und dort insbesondere einrasten, wodurch die Führungsbahnen der aneinandergrenzenden Bahnkörper fluchtend aneinander ausgerichtet werden.

Der Antrieb der Transportschlitten entlang der Führungsbahnen
geschicht mechanisch mittels Zahnstange und Ritzel.

Der mechanische Antrieb wird mit Hilfe einer Zahnstange und Antriebsritzeln ausgeführt.

Prinzipiell wird das Antriebsritzel dabei im Transportschlitten angeordnet.

Die auf der Rückfahrt befindlichen Transportschlitten können dagegen gegen einen Anschlag gefahren werden, der vorzugsweise kurz vor dem Ende des mittleren, festen Bahnkörpermoduls angeordnet ist.

Der Anschlag muss deaktivierbar sein, um mittels dieses deaktivierbaren Anschlages oder Haltepunktes von dort aus immer nur einen oder eine definierte Anzahl von Transportschlitten auf das schwenkbare Anfangsmodul auffahren zu lassen zum Verschwenken in fluchtende Lage mit der Vorwärts-Führungsbahn.

Der Fall, das Antriebsritzel im Transportschlitten anzuordnen, erfordert zwar eine Zuführung der Antriebsenergie - meist elektrische Energie - von der Führungsbahn, d.h. dem Bahnkörper aus, in den Transportschlitten, bietet dafür jedoch weitere Vorteile, die mit einem antriebslosen Transportschlitten nur schwierig zu realisieren sind.

So sind beispielsweise in der Aufsicht betrachtet gekrümmte Führungsbahnen realisierbar, indem die dann entlang der Führungsbahn verlaufende Zahnstange analog gekrümmt ist und bei bis zu zwei Antriebsritzeln pro Transportschlitten auch eine Kurvenfahrt des Transportschlittens keine Probleme bereitet.

Bei Anordnung der Zahnstange im Transportschlitten dagegen muss die Zahnstange in der Aufsicht betrachtet gerade ausgebildet sein und eine Kurvenfahrt entlang einer gekrümmten Führungsbahn, entlang derer Antriebsritzel angeordnet sind ist nur vorstellbar, wenn während der Kurvenfahrt nur jeweils eines der Antriebsritzel im Eingriff mit der Zahnstange steht und zusätzlich eine radiale Verlagerung des Ritzels und/oder der Zahnstange ermöglich ist.

Um den Raumbedarf gering zu halten und vor allem die Transportvorrichtung modulartig aufbauen zu können, empfiehlt es sich, zumindest bei den mittleren, feststehenden Bahnmodulen die Antriebseinheiten nicht nur innerhalb des Längenbereiches dieser Bahnmodule, sondern auch im Inneren der Bahnmodule anzuordnen, wodurch Breite und Höhe der Module gering gehalten werden.

Bei den Anfangs- und Endmodulen, die drehbar ausgeführt sind, können die Antriebseinheiten auch axial versetzt außerhalb dieser Module angeordnet werden, was den Vorteil hat, dass zuführende Kabel und andere Leitungen keinen mechanischen Belastungen durch die ständige Drehung dieser Bahnkörper ausgesetzt sind, denn bei einer Anordnung außerhalb können die Antriebseinheiten stationär positioniert werden und der Antriebsstrang, der sich im inneren des Bahnkörpermoduls befindet, bei Drehung des Moduls mit diesem mitdrehen.

Um die Herstellung und Vorratshaltung zu vereinfachen, ist der Bahnkörper des Anfangs- und Endmoduls vorzugsweise der gleiche wie der des mittleren Moduls bis auf die Tatsache, dass er zusätzlich schwenkbar bzw. drehbar gelagert ist.

Falls bei den Anfangs- und Endmodulen die Antriebseinheiten trotz der mechanischen Belastung der Kabel innerhalb dieser Module angeordnet sind, empfiehlt sich eine abwechselnde Vorwärts- und Rückwärtsdrehung dieser Module statt einer immer gleich währenden Vorwärtsdrehung, um ein Verdrillen von Kabeln und anderen Leitungen zu vermeiden.

Die Mitnehmer auf den Transportschlitten sind Sauger, die vorzugsweise in zwei oder mehreren Reihen nebeneinander verlaufend in Transportrichtung angeordnet sind, so dass unterschiedlich breite und lange Produkte auf ein und demselben Transportschlitten gehalten werden können, also unter Umständen auch Produkte, die seitlich oder sogar in Längsrichtung über den Transportschlitten vorstehen.

Dadurch muss nicht beim Wechsel des Produktes automatisch immer der Transportschlitten gewechselt und an das Produkt angepasst werden.

Sollte dennoch der Wechsel eines Transportschlittens oder aller Transportschlitten notwendig sein, so sind zum einen die Transportschlitten vorzugsweise zweigeteilt ausgebildet mit einem Führungsteil, der in der Führungsbahn läuft und einem Tragteil, in der die Sauger oder andere Mitnehmer zum Halten der Produkte angeordnet sind, die von dem Führungsteil demontierbar ist.

Sollte der Transportschlitten vom Grundkörper her einstückig ausgeführt sein, kann er entweder im Ganzen ausgewechselt werden oder bei einem notwendigen Wechsel des Führungsteiles nur dieses Führungsteil ausgetauscht werden, was durch Herausfahren aus der Führungsbahn am freien Ende des Anfangs- oder Endmoduls erfolgt.

### c) Ausführungsbeispiele

Ausführungsformen sind im Folgenden beispielhaft näher beschrieben. Es zeigen:
- Fig. 1:: Eine erste Bauform der Transportvorrichtung in unterschiedlichen Ansichten,
- Fig. 2:: eine Detaildarstellung aus Figur 1b,
- Fig. 3:: eine zweite Bauform der Transportvorrichtung, und
- Fig. 4:: weitere Bauformen.

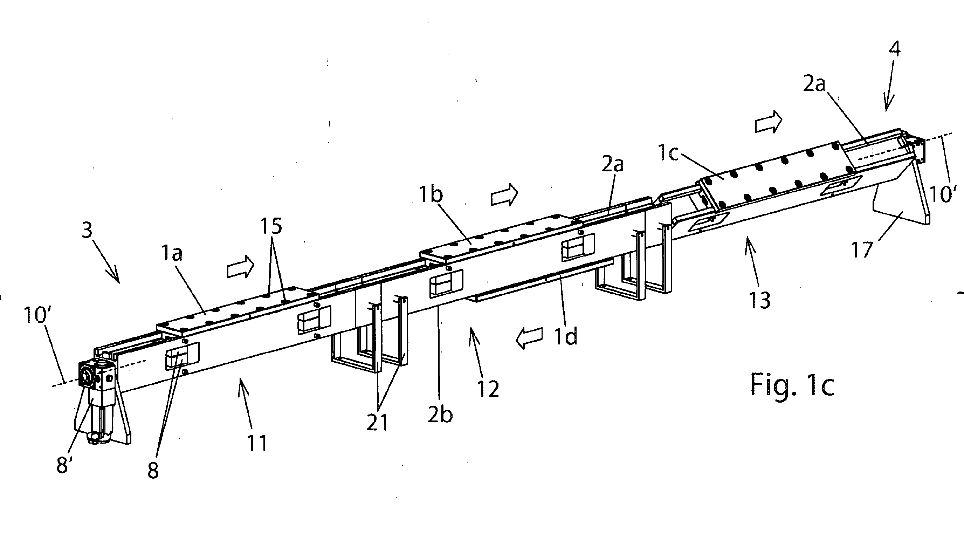

Am besten lässt Figur 1c das Grundprinzip erkennen.

Transportschlitten 1a, b, c..., auf denen in der Praxis auf der Oberfläche befindlichen Sauger 15 ein oder mehrere Objekte gehalten werden - werden entlang der Transportstärke von deren Anfang 3 zu deren Ende 4 bewegt, mit einem oder mehreren definierten Zwischenstopps an bestimmten Bearbeitungsstationen oder auch mit einer definierten Geschwindigkeit auf Teilstrecken oder auf der gesamten Strecke.

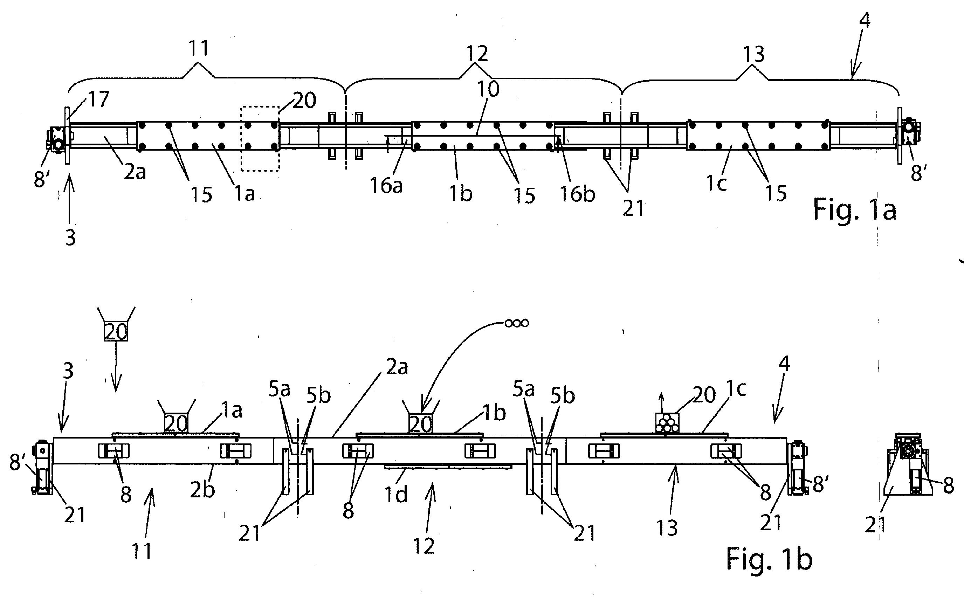

Dabei werden die einzelnen Schlitten 1a, b, c separat und unabhängig entlang der Transportbahn 2a bewegt, die sich auf der Oberseite der Bahnkörper 11, 12, 13 befindet, wie in den Figuren 1a und 1b dargestellt.

Sobald ein Transportschlitten 1c auf dem Endmodul 13 des Bahnkörpers angekommen ist, an der üblicherweise das Objekt 20 wieder von dem Transportschlitten 1c entfernt wird, muss der leere Transportschlitten 1c wieder zum Anfang 3 der Transportstrecke zurücktransportiert werden, und zwar ohne die nächsten, auf der oberen Transportbahn 2a mit Produkten beladen herannahenden Transportschlitten 1 b, 1a... zu behindern.

Um dies zu erreichen, befindet sich auf den Bahnkörpern 11, 12, 13 sowohl auf der Oberseite eine Transportbahn 2a als auch auf der gegenüberliegenden Unterseite eine analoge Transportbahn 2b.

Das Endmodul 13 kann um seine Längsachse 10' um wenigstens 180° gedreht werden, so dass der soeben auf der oberen Transportbahn 2a entleerte Transportschlitten 1 durch diese Drehung nach unten gedreht und in fluchtende Lage mit der unteren Transportbahn 2b des anschließenden mittleren Moduls 12 des Bahnkörpers gebracht wird. Diese Drehung hat in Figur 1c gerade begonnen.

Nach Vollendung dieser 180°-Drehung kann der Schlitten 1c in Figur 1 dann auf der unteren Transportbahn 2b für die Rückwärtsbewegung zum Ende 3 bewegt werden, wie in Figur 1c anhand des Transportschlittens 1d ersichtlich.

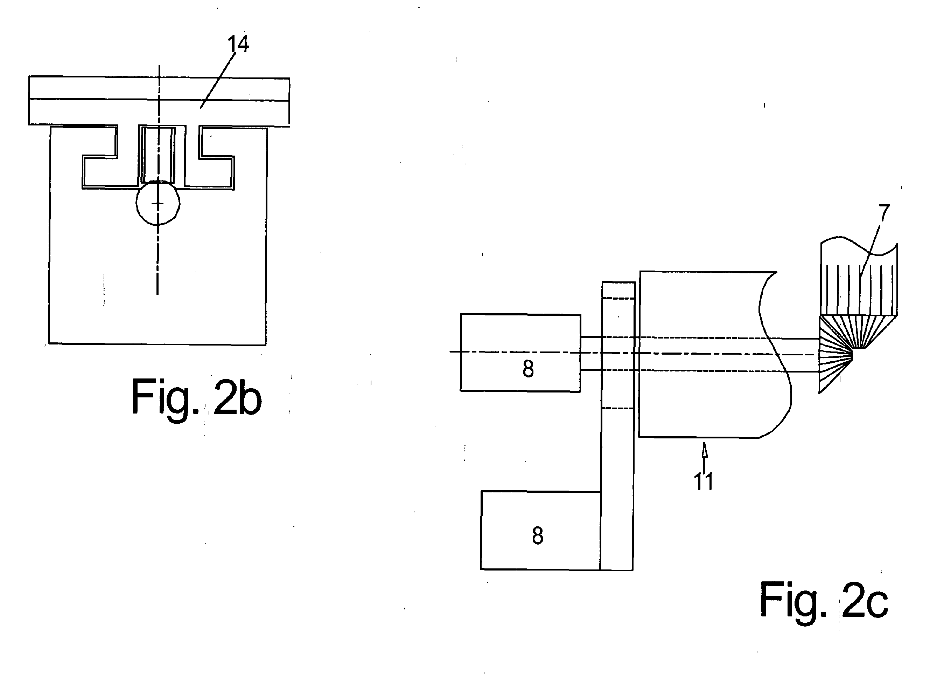

Daraus wird klar, dass die Schlitten gegen ein Abheben von der Transportbahn 2a, b gesichert sein müssen, beispielsweise durch formschlüssigen Hintergriff, wie anhand der Figur 2b im Detail erläutert.

Sobald auf der unteren Transportbahn 2b ein Transportschlitten, z. B. der Schlitten 1d, das Ende 3 erreicht hat, also sich an der Unterseite des Anfangsmoduls 11 befindet, wird zunächst abgewartet, bis der eventuell noch auf der oberen Führungsbahn 2a dieses Anfangsmoduls 11 vorhandene Transportschlitten 1a, in der Regel mit Objekten beladen, dieses Anfangsmodul 11 in Richtung mittleres Modul verlassen hat, also die obere Führungsbahn 2a leer ist.

Dann wird dieses Anfangsmodul mit dem an der Unterseite befindlichen Schlitten z. B. 1d ebenfalls um 180° gedreht, sodass der angekommene leere Schlitten 1d sich dann auf der Oberseite des Anfangsmoduls 11 und fluchtend mit der oberen Führungsbahn 2a des angrenzenden Mittelmodule der Startposition, in der Regel der Beladeposition, befindet.

Eine typische derartige Transportstrecke ist - wie in Figur 1b angedeutet - die Strecke vom Aufsetzen der geöffneten, aufgerichteten Verpackungen auf den Transportschlitten im Anfangsmodul 11, das Befüllen und Verschließen der Verpackungen in Form der Objekte 20 im Bereich des mittleren Moduls 12 und das Entnehmen der gefüllten und geschlossenen Verpackungen als Objekte 20 vom Endmodul 13, bevor die leeren Schlitten dann zurück zum Anfang transportiert werden.

Bei dieser und auch bei anderen Lösungen können entsprechend der Anzahl der notwendigen Bearbeitungsschritte dazwischen mehrere Mittelmodule 12 zwischen dem Anfangs- und Endmodul 11 und 13 angeordnet sein, wobei die Bahnkörper der Mittelmodule 12 in aller Regel nicht drehbar ausgeführt sein müssen.

An den entsprechenden Stationen können die Schlitten in definierter Position angehalten werden und von derartigen Haltepositionen kann es eine oder mehrere im Verlauf eines Moduls, insbesondere des mittleren Moduls 12, geben, wobei in der Regel bei einer Verpackungsstraße entlang jeder Station der Verpackungsstraße (Aufrichten mit Auflegen, Befüllen, Verschließen, Entfernen der gefüllten und geschlossenen Behälter) jeweils ein Bahnkörpermodul mit nur vorzugsweise einem Haltepunkt für die Transportschlitten verwendet wird.

Die Figuren 1 zeigen weiterhin die in Transportrichtung 10 an jedem Transportschlitten 1a, b.. mehreren hintereinander angeordneten und jeweils beidseits vorhandenen Sauger 15, mit deren Hilfe Objekte 20 auch unabhängig von ihrer Gestalt und Größe auf den Transportschlitten 1a,b,... transportiert werden können.

Wie vor allem in der Aufsicht der Figur 1a ersichtlich, ergibt der Rücktransport auf der Unterseite der Bahnkörper eine besonders schmale Bauform der Transportvorrichtung und geringen Raumbedarf in der Breite und vor allem kollidieren selbst seitlich über die Transportschlitten 1a, b, c... hinausstehende Objekte 20 nicht mit unmittelbar daneben befindlichen Transportbahnen für beispielsweise die Rückwärtsbewegung der Transportschlitten 1a, b, c.

Eine Drehung um 180° und vorzugsweise beim nächsten mal wieder um den gleichen Winkelbetrag zurück beim Anfangs- und Endmodul 11, 13 ist die bevorzugte Lösung, da dies immer eine Fluchtung mit der zweiten, unten liegenden Transportbahn 2b des mittleren Moduls ergibt.

### Denkbar sind jedoch auch andere Lösungen:

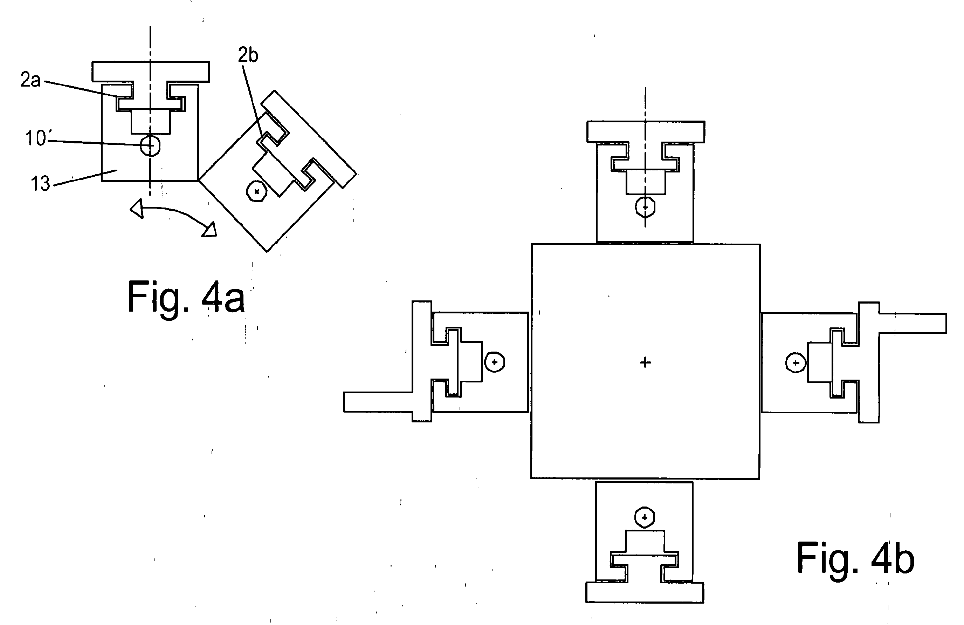

Gemäß Figur 4a befinden sich die zwei Transportbahnen 2a, b bezüglich des Drehpunktes des z. B. Endmoduls 13 nur um einen Schwenkwinkel von ca. 20° auseinander, was nur einen sehr kurzen Schwenkweg des beweglichen Moduls 11, 13 bewirkt und damit eine schnelle Verlagerung des betreffenden Schlittens 1a zur Fluchtung mit der anderen, rückführenden Transportbahn 2b, die durch das Verschwenken auch noch etwas niedriger liegt als die anliefernde Transportbahn 2a und damit Kollisionen vermeiden hilft.

Anhand der Figur 4a wird auch klar, dass es sich bei der Verlagerung der beweglichen Bahnkörper 11, 13 nicht unbedingt um eine Schwenkbewegung handeln muss, sondern auch eine seitliche Verschiebebewegung zwischen zwei z. B. horizontalen nebeneinander liegenden Führungsbahnen 2a, b möglich ist, was dann jedoch nach Übergabe des Schlittens an die andere Führungsbahn 2b und das Weiterfahren dieses Schlittens eine Leerbewegung des beweglichen Moduls 11, 13 zurück in die Ausgangsstellung bedingt, was bei diametral einander gegenüberliegenden Bahnen 2a, b nicht notwendig ist.

Figur 4b zeigt eine Bauform mit einem quadratischen Bahnkörper, bei dem zwei Paare von Führungsbahnen, 2a, b, 2'a, 2'b vorhanden sind, auf denen jeweils eine spezifische Art von Transportschlitten 1a, 1b, ...; 1'a, 1'b, ... läuft.

Die beweglichen Module 11, 13 dienen dabei gleichzeitig als Umsetzer von der Führungsbahn 2a auf die Führungsbahn 2b und von der Führungsbahn 2'a auf die Führungsbahn 2'b, was natürlich in der Regel nur separat und nicht gleichzeitig erfolgen kann.

Figur 1 zeigt ferner die Stellfüße 21, mit denen am Anfang und Ende die einzelnen Module 11, 12, 13 gegenüber dem Untergrund aufgeständert sind. Dabei ist ersichtlich, dass bei dem Anfangs- und Endmodul 11, 13 der jeweils an das mittlere Modul 12 angrenzende, aufgeständerte Teil des beweglichen Bahnkörpers 11, 13 nicht mitdreht beim Verschwenken des Restes des Bahnkörpers 11, 13.

Stirnseitig außerhalb der freien Enden dieser beweglichen Bahnkörper-Module 11, 13 sind die Motore 8' für das Verschwenken dieser Bahnkörper 11, 13 sichtbar.

Der definierte Antrieb der einzelnen Transportschlitten 1a, b, ... unabhängig voneinander muss vorzugsweise von einer nicht dargestellten, zentralen Steuerung für die gesamte Transportstrecke realisiert werden.

Eine modulartig aufgebaute Steuerung, die jedem Bahnkörpermodul 11, 12, 13 zugeordnet ist, ist jedoch ebenfalls vorstellbar, wenn die einzelnen Steuerungsachsen z. B. über einen Datenbus gekoppelt sind.

In den Figuren 1 ist eine mechanische Antriebslösung dargestellt, bei der - wie in Figur 2b ersichtlich - jeder Transportschlitten 1 gegen das Abheben formschlüssig umgriffen in der Führungsbahn 2a oder b geführt ist und dabei in seiner Längsrichtung vorzugsweise über seine gesamte Länge eine Zahnstange 6 trägt, vorzugsweise an der Innenseite seiner formschlüssig in die Führungen eingreifenden Führungsteiles 14.

Entlang jedes Bahnkörpers 11, 12, 13 ist mindestens ein, vorzugsweise mehrere in Transportrichtung 10 beabstandete, Antriebsritzel 7a, b angeordnet und zwar entlang jeder der beiden Führungsbahnen 2a, b und vorzugsweise in jedem Bahnkörper 11, 12, 13.

Die Abstände zwischen zwei an einer Führungsbahn hintereinander abfolgenden Ritzel 7a, b ist so bemessen, dass sie geringer ist als die Länge der Zahnstange 6 ist und dadurch die Zahnstange 6 immer in Eingriff mit mindestens einem Ritzel 7a, b steht.

Vorzugsweise wird jedes der Ritzel 7a, b über einen separaten Motor 8 angetrieben, die alle mit der vorzugsweise zentralen Steuerung in Verbindung stehen.

Auf diese Art und Weise kann jeder der Schlitten 1a, b... separat und unabhängig von den anderen Schlitten definiert entlang der Transportstrecke auf der Transportbahn 2a vorwärts und zurück auf der Transportbahn 2b bewegt werden, wobei die Steuerung selbstverständlich auch das Verschwenken der Anfangs- und Endmodule 11, 13 des Bahnkörpers steuert.

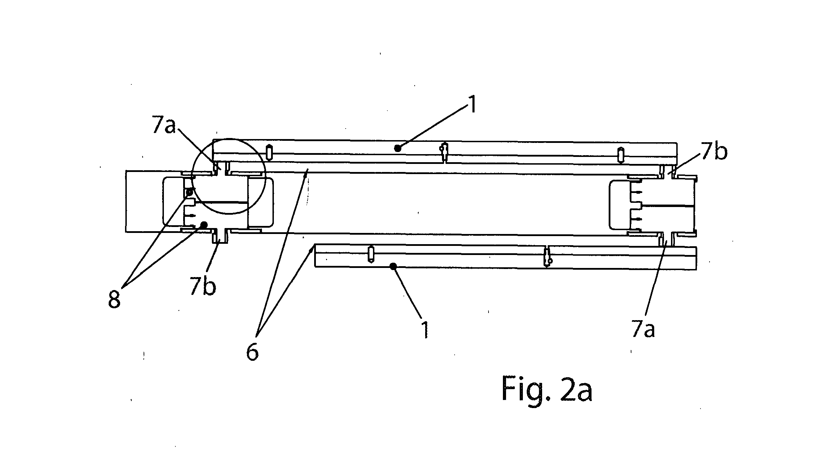

Die Motore 8 sind dabei zumindest beim mittleren Modul 12 - wie in der Vergrößerung der Figur 2 dargestellt - innerhalb des Bahnkörpers angeordnet.

Bei den Anfangs- und Endmodulen 11, 13 ist auch eine Anordnung stirnseitig außerhalb des freien Endes des jeweiligen Moduls möglich, wie in Figur 2c dargestellt.

Der Motor 8 treibt dann das Antriebsritzel 7 über eine zentrale, auf der Längsachse 10', der Schwenkachse des Bahnkörpers 11, 13 angeordnete Welle mit Hilfe z. B. einer Kegelradverzahnung.

Dies hat den Vorteil, dass bei entsprechender Ansteuerung beim Verschwenken des Anfangs- oder Endmoduls 11, 13 nicht nur des Schwenk-Motors 8', sondern auch des Schlittenmotors 8 dieser die Schwenkbewegung bewirkt, die das mit dem Bahnkörper mitschwenkende Antriebsritzel 7 mitmachen muss, von dem aus Übersichtlichkeitsgründen in Figur 2c nur eines dargestellt ist.

In der Praxis wären für die beiden Führungsbahnen 2a, b dieses Bahnkörpers 11, 13 wenigstens insgesamt zwei Ritzel 7a, b vorhanden und dementsprechend auch zwei Schlitten-Motore 8.

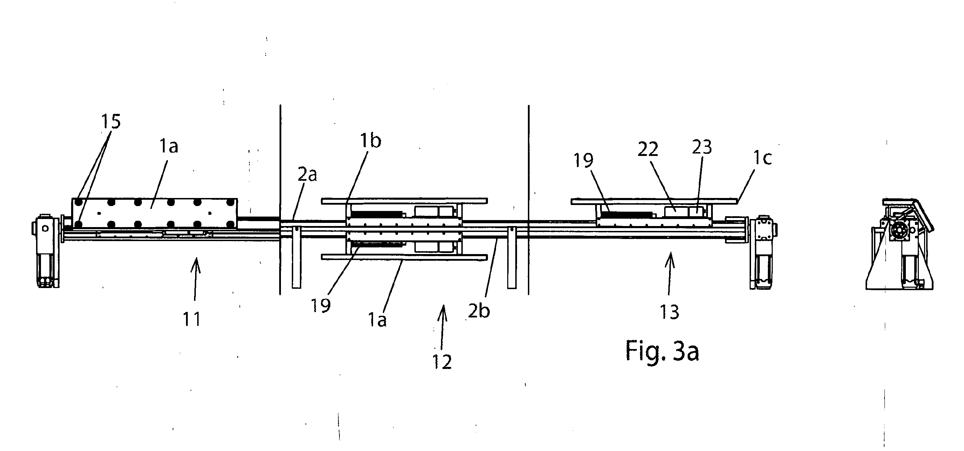

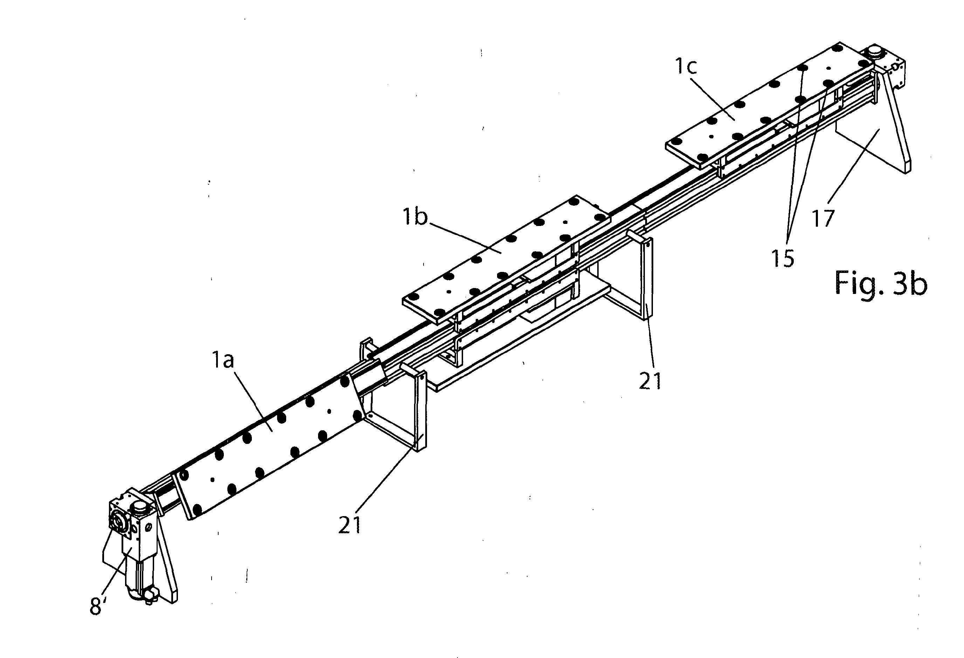

Die Darstellungen der Figuren 3 unterscheiden sich von denjenigen der Figuren 1 dadurch, dass hier der Antrieb der Schlitten 1a, b mittels elektrischer Linearmotoren 19 realisiert ist.

Wie bei elektrischen Linearantrieben üblich, befindet sich der Stator abgewickelt auf die gesamte Länge der Führungsbahn 2a und ebenso der anderen Führungsbahn 2b verteilt, während ein Läufer abgewickelt jeweils entlang jedes Schlittens 1a, b bzw. c... angeordnet ist.

Dies hat zum einen den Vorteil, dass der mechanische Bauaufwand sehr viel geringer ist.

Darüber hinaus kann durch den in den Schlitten 1a,b,... mit Hilfe des Linearmotors 19 vorhandenen Stromes eine dort angeordnete Vakuumpumpe 22 unmittelbar den Unterdruck erzeugen, der dann gesteuert über damit verbundene Ventile 23 die Sauger 15 des jeweiligen Schlittens 1 a, b, c mit Unterdruck versorgt.

Die Transportschlitten 1a,b,... sind - unabhängig von der Antriebslösung - vorzugsweise zweiteilig aufgebaut mit einem Führungsteil 14, welches nur bei Beschädigungen ausgetauscht wird und einem Tragteil 24, in dem die Sauger 15 angeordnet sind und welches abhängig von Gestalt und Gewicht der zu transportierenden Objekte 20 ausgetauscht werden kann und beispielsweise mit Hilfe von oben einrastenden Positionierstiften 25 in immer gleicher Relativlage am Führungsteil 14 befestigt werden kann.

Auch die Führungsteile 14 können - z. B. nach einer Beschädigung - auf einfache Art und Weise an der Transportvorrichtung ausgetauscht werden, in dem sie - beispielsweise nach Entfernen eines Blockierungselementes - aus einem der freien Enden der Führungsbahn 2a,b herausgefahren werden und dort ein neues Führungsteil eingeführt wird.

Um nach einem solchen Einsetzen wieder eine definierte Anfangsposition für jeden der Schlitten1a,b durch die Steuerung zu erreichen, sind mehrere einfache Methoden gangbar:
Die einfachste Methode besteht darin, alle Schlitten 1a,b, die ja eine bekannte Länge besitzen, in berührender Abfolge hintereinander gegen einen Anschlag 17, beispielsweise am Anfang 3 der Transportstrecke, zu fahren.

Dadurch ist aufgrund der definierten Lage des ersten Schlittens 1a am Anschlag 17 und der somit bekannten Länge jedes der Transportschlitten 1 a,b, ... die Lage jedes einzelnen Schlittens definiert bekannt und kann der Steuerung von da ab als Startposition dienen.

Die andere Methode besteht darin, jeden der Transportschlitten 1 a,b von der momentanen Lage aus in eine für alle Schlitten übereinstimmende Richtung bis zum nächsten der definierten Haltepunkte auf der jeweiligen Transportbahn 2a,b zu fahren und dies dann für jeden Transportschlitten als Startpunkt für die weitere Steuerung zu verwenden.

Eine solche Transportvorrichtung, deren Bahnmodule 11, 12, 13 insbesondere jeweils einen Haltepunkt umfassen, lässt sich insbesondere in eine modulartig aufgebaute Verpackungsanlage sehr gut integrieren, indem ein Modul des Bahnkörpers 11, 12, 13 jeweils einer Länge des Verpackungs-Maschinenmoduls entspricht und die Bahnmodule und dementsprechend auch die Maschinenmodule der Verpackungsmaschine gekoppelt werden, indem die Bahnmodule 11, 12, 13 der Transportvorrichtung stirnseitig mit Hilfe der dort vorhandenen Positionierelemente 5a, b gegeneinander positioniert und fixiert werden.

### BEZUGSZEICHENLISTE

- 1 a, b: Transportschlitten
- 2a, b: Führungsbahn
- 3: Anfang
- 4: Ende
- 5a, b: Positionierelemente
- 6: Zahnstange
- 7a,b: Antriebsritzel
- 8: Motor
- 8': Motor
- 9: Transportstrecke
- 10: Längsrichtung
- 10': Längsachse
- 11: Bahnkörper; Anfangsmodul
- 12: Bahnkörper; mittleres Modul
- 13: Bahnkörper; Endmodul
- 14: Führungsteil
- 15: Sauger
- 16: Haltemagnet
- 17: Anschlag
- 18: Steuerung
- 19: Linearmotor
- 20: Objekt
- 21: Stellfuß
- 22: Vakuumpumpe
- 23: Ventile
- 24: Tragteil
- 25: Positionierstifte

## Patentansprüche

1. Transportvorrichtung, insbesondere lineare Transportvorrichtung, zum Transportieren von Objekten (20) mit
- wenigstens zwei Führungsbahnen (2a, 2b), die zwischen einem Anfang (3) und einem Ende (4) der Transportvorrichtung verlaufen, und
- mehreren entlang den Führungsbahnen (2a, 2b) verfahrbaren Transportschlitten (1a, 1b),
wobei die Führungsbahnen (2a, b) in Längsrichtung (10) entlang von Bahnkörpern (11, 12, 13), von denen es einen Anfangsbahnkörper (11), einen Endbahnkörper (13) und mindestens einen mittleren Bahnkörper (12) gibt, ausgebildet sind, wobei jeder Bahnkörper (11, 12, 13) wenigstens zwei Führungsbahnen (2a, 2b) aufweist, und
wobei die Transportvorrichtung Motore (8') zum Drehen des Anfangsbahnkörpers (11) und des Endbahnkörpers (13) um ihre jeweilige Längsachse (10') aufweist, so dass die darauf befindlichen Führungsbahnen (2a, 2b) in fluchtenden Anschluss an die Führungsbahnen (2a, 2b) des wenigstens einen mittleren Bahnkörpers (12) bringbar sind,
**dadurch gekennzeichnet, dass**
- *die Transportvorrichtung einen mechanischen Antrieb für die Transportschlitten (1a, b) entlang der Führungsbahn (2a, b) aufweist, der eine Zahnstange (6) und damit kämmende Antriebsritzel (7a, b) umfasst,*
- *das Antriebsritzel (7a, b) im Transportschlitten (1a, b) angeordnet ist,*
- *die einzelnen Antriebsritzel (7a, b) separat gesteuert antreibbar sind,*
so dass die Transportschlitten (1 a, 1 b) unabhängig voneinander verfahrbar sind.

2. Vorrichtung nach Anspruch 1,
**dadurch gekennzeichnet, dass**
- der oder die mittleren Bahnkörper (12) feststehend sind und insbesondere der mittlere Bahnkörper (12) aus mehreren gleichgestalteten Elementen besteht.

3. Vorrichtung nach einem der vorhergehenden Ansprüche,
**dadurch gekennzeichnet, dass**
- die Führungsbahnen (2a, b) auf den Außenflächen der Bahnkörper (11, 12, 13), insbesondere auf der Oberseite (11a, 12a, 13a) und der Unterseite (11b, 12b, 13b) der Bahnkörper (11, 12, 13), ausgebildet sind, und insbesondere
- der Bahnkörper einen polygonen, insbesondere rechteckigen Querschnitt besitzt.

4. Vorrichtung nach einem der vorhergehenden Ansprüche,
**dadurch gekennzeichnet, dass**
- die Bahnkörper (11, 12, 13) stirnseitig formschlüssig einrastende Positionierelemente (5a, b) aufweisen, und/oder
- die Bahnkörper (11, 12, 13) nicht nur ein, sondern mehrere Paare von Führungsbahnen aufweisen, insbesondere bei einem rechteckigen Querschnitt zwei Paare von Führungsbahnen, und/oder
- die Transportschlitten (1a, b) für jeweils ein Paar von Führungsbahnen (2a, b) identisch gestaltet sind.

5. Vorrichtung nach einem der vorhergehenden Ansprüche,
**dadurch gekennzeichnet, dass**
- die einzelnen Antriebsritzel (7a, b) separat gesteuert antreibbar sind und insbesondere jeweils über einen eigenen Antriebsmotor (8) verfügen.

6. Vorrichtung nach einem der vorhergehenden Ansprüche,
**dadurch gekennzeichnet, dass**
- die Führungsbahn (2a, b) das Führungsteil (14) des Transportschlittens (1a, b) formschlüssig umgreift und am freien Ende des Anfangs- und Endmoduls (11, 13) wenigstens eine Transportbahn (2a, b) stirnseitig frei ausläuft zum Wechseln eines Transportschlittens (1a, b), und/oder
- der Bahnkörper der mittleren Module (12), insbesondere aller mittleren Module (12), und insbesondere auch der Anfangs- und Endmodule(11, 13) vom Aufbau her der gleiche Bahnkörper ist.

7. Vorrichtung nach einem der vorhergehenden Ansprüche,
**dadurch gekennzeichnet, dass**
- die Transportschlitten (1a, b) Mitnehmer zum Halten von einen oder mehreren Objekten auf dem Transportschlitten aufweisen und die Mitnehmer insbesondere mit Unterdruck beaufschlagte Sauger (15) sind, und/oder
- die Haltepositionen der Transportschlitten entlang der Führungsbahn mittels schaltbarer Elektromagnete als Haltemagnete (16) realisiert sind.

8. Verfahren zum Bewegen von mehreren Transportschlitten (1a, b..) mit eine Transportvorrichtung nach Anspruch 1, wobei die Transport schlitten (1a, b..) an eine Führungsbahn (2a, b), unabhängig voneinander vom Anfang zum Ende einer Transportstrecke und zurück, verfahrbar sind,
am Anfang und Ende der Transportstrecke der Transportschlitten zusammen mit dem sie führenden Anfangs- bzw. Endmodul (11, 13) der Führungsbahn (2a, b) um die Längsrichtung (10) der Führungsbahn (2a) verschwenkt, und anschließend wieder fluchtend ausgerichtet zu einer anderen Transportbahn gebracht wird, auf der der Transportschlitten (1a, b..) weiterbewegt wird,
**dadurch gekennzeichnet, dass**
- der Antrieb der Transportschlitten (1a, b) mechanisch, insbesondere mittels Zahnstangen (6) und Ritzeln (7a, b) durchgeführt wird und die Antriebsenergie den Bahnkörpern (11, 12, 13) zugeführt wird,
- *das Antriebsritzel (7a, b) im Transportschlitten (1a, b) angeordnet ist*
- *die einzelnen Antriebsritzel (7a, b) separat gesteuert antreibbar sind,* und die Transportschlitten (1a, 1b) unabhängig voneinander verfahrbar sind.

9. Verfahren nach Anspruch 8
**dadurch gekennzeichnet, dass**
- vor der Inbetriebnahme der Transportvorrichtung ein Positionierlauf für die Transportschlitten (1a, b) durchgeführt wird, indem insbesondere alle auf der Transportvorrichtung vorhandenen Transportschlitten (1a, b) kontaktierend hintereinander in Reihe gegen einen Anschlag (17) an der Transportbahn (2a, b) gefahren werden, dessen Position bekannt ist, und/oder
- am Anfang der Transportbahn (2a, b) Objekte (20) auf den Transportschlitten (1a, b) aufgelegt und am Ende der Transportbahn (2a, b) von dort abgenommen werden, insbesondere mit Hilfe von Greifern oder Robotern.

10. Verfahren nach einem der vorhergehenden Ansprüche 8 oder 9,
**dadurch gekennzeichnet, dass**
- der Bahnkörper zusammengesetzt wird aus einzelnen Modulen (11, 12, 13), deren stirnseitig angeordnete Positionierelemente (5a, b) ineinander greifen und insbesondere gegeneinander verrastet werden, und/oder
- die Transportschlitten (1a, b) permanent oder wenigstens zeitweise mit Unterdruck beaufschlagt werden zur Versorgung der Sauger (15) an den Transportschlitten (1 a, b).

11. Verfahren nach einem der vorhergehenden Ansprüche 8 - 10;
**dadurch gekennzeichnet, dass**
- eine Steuerung (18) sowohl die Bewegung der einzelnen Transportschlitten (1a, b) unabhängig voneinander, als auch die Bewegungen der beweglichen Anfangs- und Endmodule (11, 13) des Bahnkörpers steuert, und/oder
- Transportschlitten (1a, b..) in die Führungsbahn (2a, b) eingeführt bzw. ausgeführt werden durch ein stirnseitiges offenes Ende der Führungsbahn (2a, b) an dem freien Ende des Anfangsmoduls (11) und/oder des Endmoduls (11) des Bahnkörpers.

12. Verfahren nach einem der vorhergehenden Ansprüche 8 - 11,
**dadurch gekennzeichnet, dass**
- auf der gleichen Führungsbahn (2a, b) unterschiedlich gestaltete Transportschlitten (1a, b) verwendet werden, und/oder
- die Transportschlitten (1 a, b) auf der Führungsbahn (2a, b) luftgelagert gleiten, und/oder
- die Anfangs- und Endmodule (11, 13) der Bahnkörper abwechselnd vorwärts und rückwärts schwenken.

## Claims

1. A transport device, in particular a linear transport device for transporting objects (20), comprising:
- at least two support tracks (2a, 2b) extending between a beginning (3) and an end of the transport device; and
- plural transport slides (1a, 1 b) that are movable along the support tracks (2a, 2b), wherein the support tracks (2a, 2b) are configured in a longitudinal direction (10) along track elements (11, 12, 13) including an initial track element (11), a terminal track element (13) and at least one intermediate track element (12),
wherein each track element (11, 12, 13) includes at least two support tracks (2a, 2b), wherein the transport device includes motors (8') for rotating the initial track element (11) and the terminal track element (13) about their respective longitudinal axes (10') so that the support tracks (2a, 2b) arranged thereon are arrangeable in connected alignment with the support tracks (2a, 2b) of the at least one intermediary track element,
- wherein the transport device includes a mechanical drive for the transport slides (1a, b) along the support track (2a, b), wherein the mechanical drive includes a gear rack (6) and a drive sprocket (7a, b) meshing therewith;
- wherein the drive sprocket (7a, b) is arranged in the transport slide (1a, b),
- wherein the particular drive sprockets (7a, b) are separately drivable in a controlled manner so that the transport slides (1 a, 1 b) are movable independently from one another.

2. The device according to claim 1,
- wherein the at least one intermediary track element (12) is fixated and in particular includes plural identical elements.

3. The device according to one of the preceding claims,
wherein the support tracks (2a, b) are configured on outer surfaces of the track elements (11, 12, 13) in particular on a top side (11a, 12a, 13a) and on a bottom side (11 b, 12b, 13b) of the track elements (11, 12, 13), and in particular wherein the track element has a polygonal, in particular rectangular cross-section.

4. The device according to one of the preceding claims,
wherein the track elements (11, 12, 13) include positioning elements (5a, b) that engage the track elements at their faces in a form locking manner, and/or
wherein the track element (11, 12, 13) does not only include one but plural pairs of support tracks, in particular includes two pairs of support tracks for a rectangular cross-section, and/or the transport slides (1a, b) for a respective pair of support paths (2a, b) are configured identical.

5. The device according to one of the preceding claims,
- wherein the particular drive sprockets (7a, b) are separately drivable in a controlled manner and in particular respectively have a particular drive motor (8).

6. The device according to one of the preceding claims,
- wherein the support track (2a, b) reaches around the support element (14) of the transport slide (1a, b) in a form locking manner and at least one transport track face terminates freely at free ends of the start module and the terminal module (11, 13) for changing a transport slide (1a, b) and/or
- wherein the track elements of the intermediary modules (12), in particular of all intermediary modules (12), and in particular also of the start modules and the end modules (11, 13) have identical configurations.

7. The device according to one of the preceding claims,
- wherein the transport slides (1a, b) have supports for supporting one or plural objects on the transport slides and the supports are in particular suction cups (15) that are loadable with vacuum, and/or
- wherein the stop positions of the transport slides are implemented along the support track through switchable support magnets (16) that are electrical magnets.

8. A method for moving plural transport slides (1a, b...) through a transport device according to claim 1, wherein the transport slides (1a, b...) are movable independently from one another along a transport track (2a, b) from a beginning of a transport path to its end and back,
wherein the transport slides together with the supporting start or terminal module (11, 13) of the support track (2a, 2b) are pivoted at a beginning and at an end of the transport path about a longitudinal direction (10) of the support track (2a) and are subsequently brought into aligned orientation again with another transport track on which the transport slide (1a, b) is moved on,
wherein the drive of the transport slides (1a, b) is provided mechanically, in particular through gear racks (6) and sprockets (7a, b) and the drive energy is provided to the track elements (11, 12, 13),
wherein the drive sprocket (7a, b) is arranged in the transport slide (1a, b),
wherein the particular drive sprockets (7a, b) are separately drivable in a controlled manner and the transport slides (1 a, b) are movable independently from one another.

9. The method according to claim 8,
- wherein a positioning run for the transport slides (1a, b) is provided in that, in particular, all transport slides (1a, b) provided on the transport device are moved in a contacting manner behind one another in series against a stop (17) at the transport path (2a, b), before starting up the transport device, wherein the position of the stop is known, and/or
wherein objects (20) are placed on the transport slide (1a, b) at the beginning of the transport track (2a, b) and are removed from the transport track at the end of the transport track (2a, b), in particular through grippers or robots.

10. The method according to one of the preceding claims 8 or 9,
- wherein the track element is assembled from particular modules (11, 12, 13) whose face side positioning elements (5a, b) engage one another and in particular are interlocked with one another, and/or
- wherein the transport slides (1a, b) are permanently or at least temporarily loaded with vacuum for feeding the suction cups (15) at the transport slides (1a, b).

11. The method according to one of the preceding claims 8 through 10,
- wherein the control (18) controls a movement of the particular transport slides (1a, b) independently from one another and also the movements of the movable start- and terminal modules (11, 13) of the track element, and/or
- wherein transport slides (1a, b...) are inserted into the support track (2a, b) or removed from the support rack through an open face end of the support track (2a, b) at the free end of the start module (11) and/or of the terminal module (11) of the track.

12. The method according to one of the preceding claims 8 through 11,
- wherein differently configured transport slides (1a, b) are used on the same support track (2a, b), and/or
- wherein the transport slides (1a, b) are sliding with air support on the support path (2a, b) and/or
- wherein the start and end modules (11, 13) of the track elements pivot forward and backward in an alternating manner.

## Revendications

1. Dispositif de transport, en particulier dispositif de transport linéaire pour le transport d'objets (20) comprenant au moins deux voies de guidage (2a, 2b) qui s'étendent entre un début (3) et une fin (4) du dispositif de transport, et
- plusieurs chariots de transport mobiles (1a, 1b) le long des voies de guidage (2a, 2b),
les voies de guidage (2a, 2b) étant réalisées dans le sens longitudinal (10) le long de corps de voie (11, 12, 13) composés de corps de voie de début (11), un corps de voie de fin (13) et au moins un corps de voie médian (12), chaque corps de voie (11, 12, 13) présentant au moins deux voies de guidage (2a, 2b), et
le dispositif de transport présentant des moteurs (8') pour la rotation du corps de voie de début (11) et du corps de fin de voie (13) autour de de l'axe longitudinal (10') de sorte que les voies de guidage (2a, 2b) se trouvant dessus peuvent être alignées aux voies de guidage (2a, 2b) d'au moins un corps e voie médian (12),
**caractérisé en ce que**
- le dispositif de transport présente un entraînement mécanique pour les chariots de transport (1a, b) le long de la voie de guidage (2a, b), qui comprend une crémaillère (6) et un pignon d'entrainement (7a, b) en prise avec cette dernière,
- le pignon d'entraînement (7a, b) est disposé dans le chariot de transport (1a, b),
- les pignons individuels d'entraînement (7a, b) étant entraînés séparément, de sorte que les chariots de transport (1a, b) sont mobiles indépendamment les uns des autres.

2. Dispositif selon la revendication 1,
**caractérisé en ce que**
- le ou les corps de voie médians (12) sont fixes et en particulier le corps de voie médian (12) se compose de plusieurs éléments de structure similaire.

3. Dispositif selon l'une des revendications précédentes, **caractérisé en ce que**
- les voies de guidage (2a, b) sont réalisées sur les surfaces externes des corps de voie (11, 12, 13) en particulier sur la face supérieure (11a, 12a, 13a) et sur la face inférieure (11b, 12b, 13b) des corps de voie (11, 12, 13) et en particulier
- le corps de voie dispose d'une section transversale polygonale, en particulier rectangulaire.

4. Dispositif selon l'une des revendications précédentes, **caractérisé en ce que**
- les corps de voies (11, 12, 13) présentent sur la face avant des éléments de positionnement emboîtés mécaniquement, et/ou
- les corps de voie (11, 12, 13) présentent non seulement une mais plusieurs paires de voies de guidage, en particulier deux paires de voies de guidage quand la section transversale est rectangulaire, et/ou
- les chariots de transport (1a, b) sont identiques pour respectivement une paire de voies de guidage (2a, b).

5. Dispositif selon l'une des revendications précédentes, **caractérisé en ce que**
- les pignons d'entraînement (7a, b) peuvent être entraînés par une commande séparée et en particulier respectivement disposer d'un propre moteur d'entraînement (8).

6. Dispositif selon l'une des revendications précédentes, **caractérisé en ce que**
- la voie de guidage (2a, b) entoure par adhérence de forme la partie de guidage (14) du chariot de transport (1a, b) et à l'extrémité libre du module de début et de fin (11, 13), au moins une voie de transport (2a, b) se termine librement en face avant pour le changement d'un chariot de transport (1a, b), et/ou
- le corps de voie des modules médians (12), en particulier de tous les modules médians (12) et en particulier également des modules de début et de fin (11, 13) est de construction identique.

7. Dispositif selon l'une des revendications précédentes, **caractérisé en ce que**
- les chariots de transport (1a, b) présentent des entraîneurs pour maintenir un ou plusieurs objets sur le chariot de transport, et les entraîneurs sont des ventouses subissant en particulier une dépression (15) et/ou
- les positions de maintien des chariots de transport sont réalisées le long de la voie de guidage au moyen d'électroaimants commutables conçus comme des aimants de maintien (16).

8. Procédé pour le déplacement de plusieurs chariots de transport (1a, b..) avec un dispositif de transport selon la revendication 1, les chariots de transport (1a, b..) étant mobiles en va-et-vient du début à la fin d'un parcours de transport le long d'une voie de guidage (2a, b..) indépendamment les uns des autres,
au début et à la fin du parcours de transport, le chariot de transport étant pivoté ensemble avec le module de début respectivement de fin (11, 13) de la voie de guidage (2a, b) les guidant, autour de la direction longitudinale (10) de la voie de guidage (2a) et étant amené ensuite en alignement par rapport à une autre voie de transport sur laquelle se poursuit le déplacement du chariot de transport (1a, b..),
**caractérisé en ce que**
- l'entraînement des chariots de transport (1a, b) est effectué mécaniquement, en particulier au moyen de crémaillères (6) et de pignons (7a, b) et l'énergie motrice est amenée aux corps de voie (11, 12, 13),
- le pignon d'entraînement (7a, b) est disposé dans le chariot de transport (1a, b),
- chaque pignon d'entraînement (7a, b) est commandé séparément en entraînement et les chariots de transport (1a, b) sont mobiles indépendamment les uns des autres.

9. Procédé selon la revendication 8, **caractérisé en ce qu'**
- avant la mise en service du dispositif de transport, il est effectué une course de positionnement pour les chariots de transport (1a, b) dans le fait en particulier que tous les chariots de transport (1a, b), dont la position est connue et qui se trouvent sur le dispositif de transport, sont déplacés sur la voie de transport (2a, b) et amenés contre une butée (17) en étant en contact les uns derrière les autres alignés et/ou,
- des objets (20) sont placés au début de la voie de transport (2a, b) sur le chariot de transport (1a, b) et sont enlevés au début de la voie de transport (2a, b) y, en particulier à l'aide de pinces ou de robots.

10. Procédé selon l'une des revendications précédentes 8 ou 9, **caractérisé en ce que**
- le corps de voie est composé de modules séparés (11, 12, 13) dont les éléments de positionnement (5a, b) disposés en face avant s'engagent les uns dans les autres et en particulier sont encliquetés les uns contre les autres, et/ou
- les chariots de transport (1a, b) subissent en permanence ou au moins partiellement une dépression pour l'alimentation des ventouses (15) sur les chariots de transport (1a, b).

11. Procédé selon l'une des revendications précédentes 8 à 10, **caractérisé en ce qu'**
- une commande (18) pilote aussi bien le déplacement de chacun des chariots de transport (1a, b) indépendamment les uns des autres qu'également les déplacements des modules de début et
de fin (11, 13) du corps de voie, et/ou
- des chariots de transport (1a, b..) sont introduits respectivement dans les voies de guidage (2a, b), respectivement guidés vers la sortie en passant par une extrémité frontale ouverte de la voie de guidage (2a, b) sur l'extrémité libre du module de début (11) et/ou du module de fin (11) du corps de voie.

12. Procédé selon l'une des revendications précédentes 8 à 11, **caractérisé en ce qu'**
- il est possible d'utiliser sur la même voie de guidage (2a, b), des chariots de transport (1a, b) de conception différente, et/ou
- les chariots de transport (1a, b) glissent sur la voie de guidage (2a, b) sur coussin d'air et/ou
- les modules de début et de fin (11, 13) des corps de voie sont basculés en alternance vers l'avant et vers l'arrière.
